## Europäisches Patentamt
## European Patent Office
## Office européen des brevets

(11) Veröffentlichungsnummer: **0 259 513 B1**

(12) **EUROPÄISCHE PATENTSCHRIFT**

(45) Veröffentlichungstag der Patentschrift:
**13.12.89**

(21) Anmeldenummer: **86112596.1**

(22) Anmeldetag: **11.09.86**

(51) Int. Cl.⁴: **G01B 7/315,** G01C 9/06, G01B 5/255

(54) Verfahren zur genauen Nachlaufspreizung und Sturz an Kraftfahrzeugen.

(43) Veröffentlichungstag der Anmeldung:
**16.03.88 Patentblatt 88/11**

(45) Bekanntmachung des Hinweises auf die Patenterteilung:
**13.12.89 Patentblatt 89/50**

(84) Benannte Vertragsstaaten:
**DE FR IT**

(56) Entgegenhaltungen:
**EP-A- 0 085 924**
**EP-A- 0 140 976**
**DE-A- 3 203 981**
**FR-A- 2 356 122**
**GB-A- 2 090 974**
**US-A- 3 855 709**
**US-A- 4 389 793**

"Autodata 1988" printed in England ISBN 0 85666-484-7

**Die Akte enthält technische Angaben, die nach dem Eingang der Anmeldung eingereicht wurden und die nicht in dieser Patentschrift enthalten sind.**

(73) Patentinhaber: **Schenck Auto-Service-Geräte GmbH, Landwehrstrasse 63 Postfach 4129, D-6100 Darmstadt(DE)**

(72) Erfinder: **Maus, Otfrid, Im Fiedlersee 34, D-6100 Darmstadt(DE)**

(74) Vertreter: **Dallhammer, Herbert, Dipl.-Ing., c/o Schenck-Auto-Service-Geräte GmbH Patentabteilung Postfach 4129 Landwehrstrasse 63, D-6100 Darmstadt(DE)**

## Beschreibung

Die Erfindung betrifft ein Verfahren zur Messung der Geometriewerte: Nachlauf, Sturz und Spreizung an Kraftfahrzeugen unter Verwendung von Neigungsmeßgeräten wobei bei freier Aufstellung des Fahrzeugs ein Fehlwinkel gemessen und mit den bei freier Aufstellung gemessenen Geometriewerten zur Korrektur entsprechend verknüpft wird.

Ein Verfahren mit den im Oberbegriff genannten Merkmalen des Anspruchs 1 ist aus der US-PS 3 855 709 bekannt geworden.

Die Messung von Spur, Sturz, Nachlauf und Spreizung an Kraftfahrzeugen, insbesondere an Personenwagen, hat definitionsgemäß zur Voraussetzung, daß die Fahrzeuglängsachse während der Messung parallel zu einer horizontalen Ebene steht. Ferner muß die Fahrzeugquerachse ebenfalls parallel mit einer horizontalen Ebene verlaufen, wenn Spreizung und Sturz gemessen werden.

Diese Voraussetzungen sind in der Praxis nur in den wenigsten Fällen gegeben. Einflüsse können beispielsweise durch den Beladungszustand des zu vermessenden Fahrzeugs entstehen. Um für die Nachlauf-, Spreizungs- und Sturzmessung diese Achsen parallel zu einer horizontalen Ebene zu bekommen, werden in der Praxis die unterschiedlichsten Verfahren angewandt, z.B. muß das Fahrzeug so lange mit Zusatzgewichten beladen werden, bis eine bestimmte Einfederung erreicht ist. Zum anderen werden Fahrzeuge mit festen Gewichten, beispielsweise von 75 kg, für zwei oder vier Fahrgäste beladen; teilweise müssen auch noch Zusatzgewichte in den Kofferraum gelegt werden (vgl. hierzu Autodata 1988 printed in England ISBN 0-85666-484-7). Insbesondere Fahrzeuge mit unabhängig aufgehängten Hinterrädern weisen sonst bei unsymmetrischer Beladung erhebliche Fehler der Geometriewerte auf.

Manche Fahrzeughersteller ziehen mit Hilfe von Seilen die Karosserie auf den Boden und spannen die Seile so vor, daß die Fahrzeuglängs- und -querachse jeweils die gewünschte Idealposition einnimmt.

Bei all diesen Methoden werden zusätzlich an den Aufstellungsort während der Vermessung sehr enge Forderungen hinsichtlich der horizontalen Ausrichtung gestellt. Diese Forderungen sind insbesondere bei Hebebühnen, wegen deren Verformung unter dem Gewicht des Fahrzeugs oft nur schwer und mit hohem Aufwand zu erfüllen.

Die Erfindung hat sich nun zum Ziel gesetzt, Fahrzeuge so zu vermessen, daß der nachteilige Einfluß der beschriebenen Fehlerquellen vermieden wird und daß die Vermessung der Fahrzeuge ohne besondere Gewichte, ohne das Festzurren auf dem Boden auch auf einer nicht völlig waagerechten Fläche leicht durchgeführt werden kann.

Erfindungsgemäß wird daher vorgeschlagen, daß bei einem Verfahren der eingangs genannten Art mindestens ein weiteres Neigungsmeßgerät den Fehlwinkel der Längs- und/oder Querachse des Fahrzeugs zur Ebene seiner einmal festgelegten idealen horizontalen Aufstellung mißt.

Durch den erfindungsgemäßen Einsatz eines weiteren Neigungsmeßgeräts zu den üblichen und normalerweise notwendigen Meßgeräten wird der Fehlwinkel der Längs- und/oder Querachse des Fahrzeugs zur Ebene seiner idealen horizontalen Aufstellung gemessen und hiermit die der Erfindung zugrundeliegende Aufgabe erfinderisch gegenüber dem Stand der Technik gelöst. Die bereits erwähnte Druckschrift Autodata, veröffentlicht 1988, zeigt, daß es auch zu diesem Zeitpunkt noch nicht ohne weiteres für den Fachmann gang und gäbe war, erfindungsgemäß ein weiteres Neigungsmeßgerät zur Lösung der der Erfindung zugrundeliegenden Aufgabe einzusetzen.

Bei dem erfinderischen Verfahren wird dabei wie folgt vorgegangen: An einer definierten Stelle des Fahrzeugrahmens oder Wagenkastens werden mit Neigungsmeßgeräten die Neigungswinkel der Fahrzeuglängsachse einerseits und der Fahrzeugquerachse andererseits gegenüber einer gedachten horizontalen Ebene gemessen und mit den Meßresultaten der an sich bekannten Nachlauf-, Spreizungs- und Sturzmeßeinrichtung verknüpft.

Diese Verknüpfung kann durch einfache Subtraktion oder Addition erfolgen. Sie kann aber auch, wie es z.B. bei Fahrzeugen mit Schräglenkern an der Hinterachse erforderlich ist, durch Abfragen von Tabellen geschehen, die für einen bestimmten Fahrzeugtyp vom Hersteller vorgegeben werden. Schließlich ist es möglich, über die für einen Fahrzeugtyp bekannten Geometriewerte der Achsaufhängung aus der Neigung einen Korrekturwert für den Fehlwinkel formelmäßig zu errechnen, der ohne jegliche Stufensprünge eine Korrektur der gemessenen Radstellungswerte zuläßt, so daß als Endergebnis der Verknüpfung die Werte für Sturz, Spur, Nachlauf und Spreizung erhalten werden, die gemessen würden, wenn sich das Fahrzeug in Idealstellung auf einer horizontalen Bezugsebene befände. Bei Fahrzeugen mit Schräglenkern hinten kann ein Fehlwinkel der Aufstellung auch einen fehlerhaften Einfluß auf die Spur der Vorderräder haben, obwohl der Spurwinkel nicht im Schwerefeld der Erde definiert ist. Auch dieser Fehler kann durch eine Funktion vorausberechnet und somit das Meßergebnis der Spur korrigiert werden.

Durch die GB-A 2 090 974 ist es an sich bekannt, eine Neigungsmessung in Richtung der Querachse vorzunehmen. Da am Fahrgestell oder Wagenkasten eines Fahrzeugs jedoch nicht immer eine im Sollzustand der Fahrzeuglängs-Querebene zu dieser Ebene parallele Auflage für das erfindungsgemäß benutzte weitere Neigungsmeßgerät gegeben ist, wird gemäß einer Weiterbildung der Erfindung vorgeschlagen, daß zusätzlich die abweichende Lage der im Kraftfahrzeug vorgesehenen Auflage für das Meßgerät zur einmal festgestellten Ebene der idealen horizontalen Aufstellung bei der Feststellung des Fehlwinkels mitberücksichtigt wird.

Als Neigungsmeßgeräte können alle geeigneten bekannten Geräte (vgl. FR-A 2 356 122) verwendet werden, zum Beispiel Neigungspendel mit elektrischem Widerstandsgeber, Neigungspendel mit Stromwaage über induktiven, kapazitiven oder optischen Abgriff der Regelgröße.

Zur Verdeutlichung der Beschreibung der Erfindung wird eine Meßvorrichtung verwendet, bei der in einem Gehäuse ein Pendel mit einer seismischen Masse drehbar aufgehängt ist. Hierbei besitzt ein verlängerter Arm des Pendels einen elektrischen Kontakt mit einer Widerstandsbahn, und zwar mit Hilfe eines Schleifers. Weiterhin ist dort eine Brückenschaltung vorgesehen, die aus der genannten Widerstandsbahn und Festwiderständen besteht, und es ist ein Verstärker der Brückenschaltung nachgeschaltet und ein Anzeigegerät mit dem Verstärker verbunden.

Weiterhin kann ein Analog-Digital-Wandler mit dem Verstärker verbunden sein. Damit können alle gemessenen Neigungswerte in einer Rechenschaltung mit den Sollwerten für einen bestimmten Fahrzeugtyp verglichen werden. Gleichzeitig wird mit einer derartigen Rechenschaltung die Kompensation der Neigung am Aufstellungspunkt der Meßeinrichtung im Fahrzeug rechnerisch berücksichtigt.

Darüber hinaus besitzt das Gehäuse der Meßvorrichtung feste Füße und in der Höhe einstellbare Füße, und es ist eine Skala am Gehäuse angeordnet. Hierdurch kann die Neigung kontrolliert oder voreingestellt werden, in der die Meßvorrichtung am Fahrgestell oder auf dem Wagenkasten aufgestellt werden muß, um die ideale horizontale Lage des Fahrzeuges zu bestimmen oder in die Messung einzubeziehen.

In der nachfolgenden Zeichnung werden die erfinderischen Verfahrensschritte näher erläutert. Es zeigen:

Fig. 1 ein zu untersuchendes Fahrzeug in Seitenansicht Fig. 2 ein zu untersuchendes Fahrzeug in Frontansicht und

Fig. 3 eine Meßvorrichtung einschließlich eines elektrischen Blockschaltbildes.

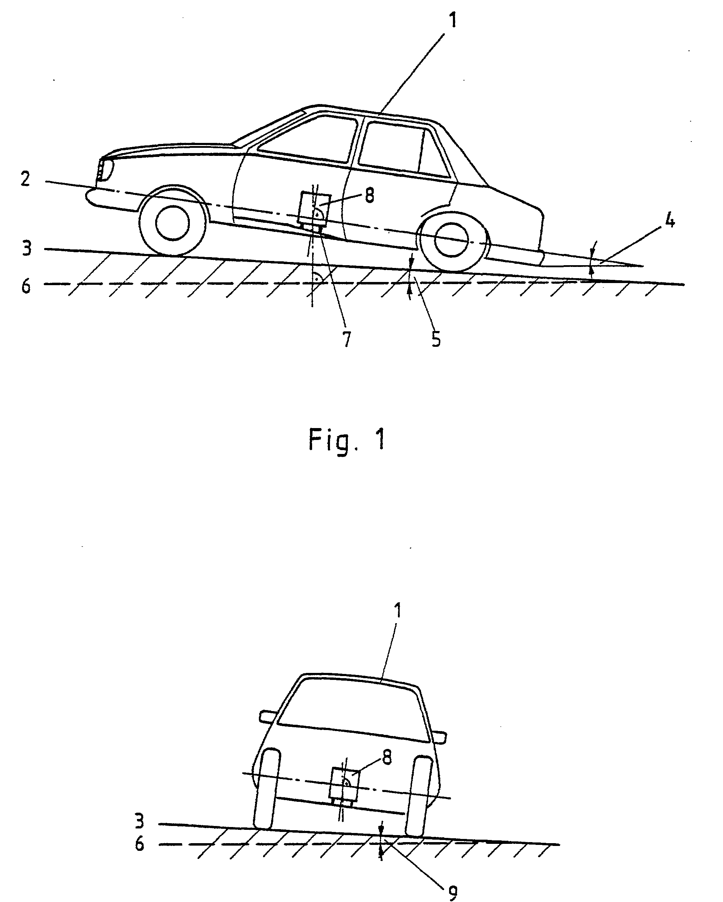

In Fig. 1 ist der grundsätzliche Aufbau einer solchen Meßeinrichtung für das erfindungsgemäße Verfahren dargestellt. Das Fahrzeug 1 mit seiner Längsmittelachse 2 ist auf einer nichthorizontalen Ebene 3 aufgestellt. Durch seinen Beladungszustand, z.B. einen vollgefüllten Kraftstoffbehälter besteht zwischen Längsmittelachse 2 und Aufstellungsebene 3 der Fehlwinkel 4. Ein weiterer Fehlwinkel 5 besteht durch die nichthorizontale Aufstellungsebene 3 gegenüber der horizontalen Ebene 6.

An einer Bezugsstelle des Fahrzeugs 7 ist ein Neigungsmeßgerät 8 aufgestellt. Dieses Gerät mißt die Neigung der Fahrzeuglängsachse 2 gegenüber der horizontalen Ebene 6. Das Neigungsmeßgerät 8 kann ferner mit einem zweiten Neigungsmeßgerät die Querneigung des Fahrzeugs zu einer horizontalen Ebene messen:

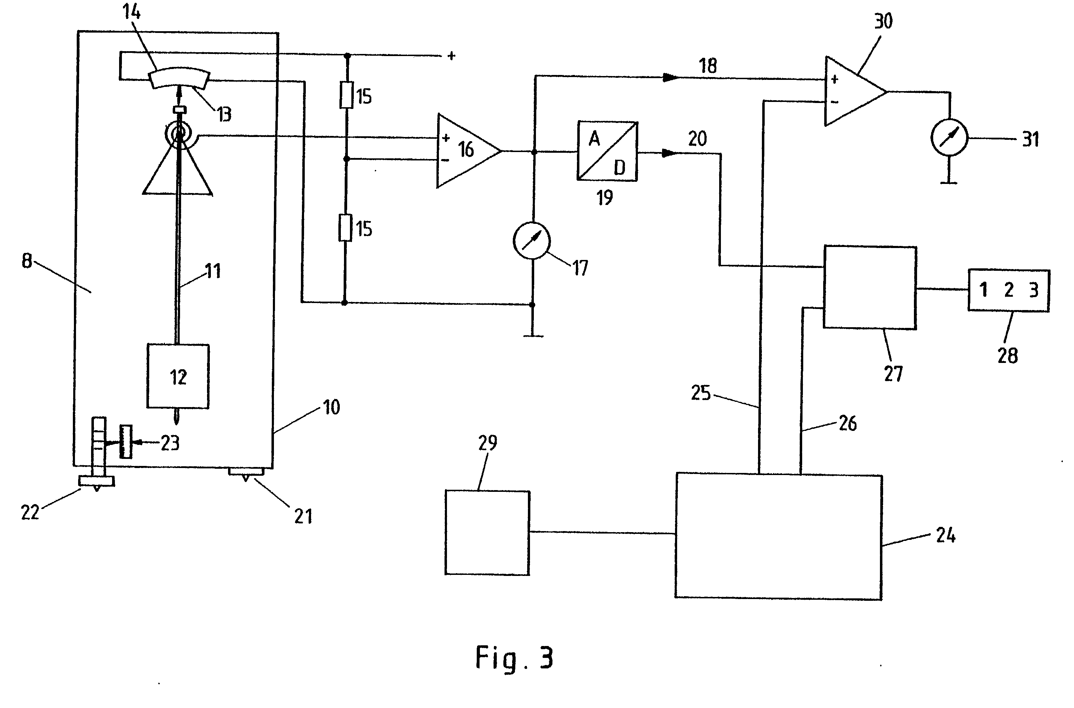

Wie in Fig. 2 dargestellt, ist das Fahrzeug 1, z.B. durch seitlich ungleichmäßige Beladung, schräg gegenüber der Aufstellungsebene 3 aufgestellt. Diese haben wiederum gegenüber der horizontalen Ebene 6 in Querrichtung einen Fehlwinkel. Der Winkel 9 gegen die Senkrechte kann von dem zweiten Neigungsmesser des Geräts 8 gemessen und als Fehler gegenüber der Horizontalen einer Auswerteeinrichtung zugeführt werden.

In Fig. 3 ist ein Beispiel für ein einfaches Neigungsmeßgerät 8 für eine Koordinate dargestellt. Im Gehäuse 10 ist ein Neigungspendel 11 mit der seismischen Masse 12 drehbar aufgehängt. Der verlängerte Arm des Pendels 11 hat elektrischen Kontakt mit einer Widerstandsbahn 13 über einen Schleifer 14. Die Widerstandsbahn 13 bildet Teil einer Widerstandsbrücke mit den Festwiderständen 15. Die Differenzspannung der Brückenschaltung wird im Verstärker 16 entsprechend und im Anzeigemeßgerät 17 zur Anzeige gebracht.

Der Ausgangswert des Verstärkers 16 kann über den Ausgang 18 direkt in eine nicht dargestellte analoge Verknüpfungsschaltung geleitet werden. Schließlich kann der gemessene Neigungswert über einen Analog-Digital-Wandler 19 in Digitalwerte umgewandelt und über den Ausgang 20 einer numerischen Rechenschaltung zur Verknüpfung der gemessenen Fehlwinkel des Fahrzeugs gegen die horizontale Ebene mit den gemessenen Sturz- und Nachlaufwinkeln des Fahrzeugs zugeführt werden.

Das Gehäuse 10 ist einerseits auf festen Füßen 21 und andererseits auf verstellbaren Füßen aufgestellt. An der Skala 23 kann ein Korrekturwert zur Einstellung des Neigungsmessers auf einen bestimmten, zur Fahrzeuglängs- und -querachse nicht parallelen Aufstellungsort im Fahrzeug, z.B. den Türschweller, abgelesen werden. Ein Neigungsmesser kann für die Längsachse mit einem weiteren für die Querachse in einem Gehäuse untergebracht oder kombiniert werden.

Die Verknüpfung der an dem Ausgang 20 anliegenden digitalen Ausgangswerte z.B. mit den vom Aufnehmer 29 gemessenen Geometriewerten geschieht über die Meßschaltung der Geometriewerte 24 und deren Ausgangsleitung 25 über einen Additions-/Subtraktionsverstärker 30.

Die korrigierten Geometriewerte werden dann im Instrument 31 analog angezeigt. Bei digitaler Anzeige werden die Ausgangswerte des A/D-Wandlers 19 der Verknüpfungsschaltung 27 einerseits zugeführt, andererseits werden die wahren vom Aufnehmer 29 gemessenen Geometriewerte von der Meßeinrichtung 24 als Digitalwerte über die Ausgangsleitung 26 der Verknüpfungsschaltung 27 zugeführt. Die Verknüpfungsschaltung 27 kann nach vorgegebenen Funktionen die Werte aus den Leitungen 20 und 26 so miteinander verknüpfen, daß im Anzeigesystem 28 der fehlerfreie Geometriemeßwert dargestellt wird.

## Patentansprüche

1. Verfahren zur Messung der Geometriewerte: Nachlauf, Sturz und Spreizung an Kraftfahrzeugen unter Verwendung von Neigungsmeßgeräten, wobei bei freier Aufstellung des Fahrzeugs (1) ein Fehlwinkel gemessen und mit den bei freier Aufstellung gemessenen Geometriewerten zur Korrektur entsprechend verknüpft wird, dadurch gekennzeichnet, daß mindestens ein weiteres Neigungsmeßgerät (8) den Fehlwinkel der Längs- und/oder Querachse des Fahrzeugs zur Ebene seiner einmal festgelegten idealen horizontalen Aufstellung mißt.

2. Verfahren nach Anspruch 1, dadurch gekennzeichnet, daß zusätzlich die abweichende Lage einer im Kraftfahrzeug (1) vorgesehenen Auflage für das weitere Neigungsmeßgerät (8) zur einmal festgestellten Ebene der idealen horizontalen Aufstellung bei der Feststellung des Fehlwinkels mitberücksichtigt wird.

## Claims

1. A method for the measurement of the geometric values: caster, camber and inclination in motor vehicles using inclination measurement devices, in which with free arrangement of the vehicle (1) an error angle is measured and, for corrrection, is correspondingly combined with the geometric values measured with free arrangement, characterised in that at least one further inclination measurement device (8) measures the error angle of the longitudinal and/or transverse axis of the vehicle to the plane of its once-determined ideal horizontal arrangement.

2. A method according to claim 1, characterised in that in the determination of the error angle there is additionally taken into account the deviation of a support provided in the motor vehicle (1) for the further inclination measurement device (8) for the once-established plane of the ideal horizontal arrangement.

## Revendications

1. Procédé de mesure de valeurs géométriques: le dévers, le carrossage et le pincement de véhicules en utilisant des appareils de mesure d'inclinaison, un angle de défaut étant alors mesuré, lorsque la position ou assiette du véhicule (1) est libre, et cet angle étant combiné logiquement, dans un but de correction, en fonction des valeurs géométriques mesurées lorsque la position est libre, caractérisé en ce qu'au moins un appareil de mesure d'inclinaison supplémentaire (8) mesure l'angle de défaut de l'axe longitudinal et/ou transversal de sa position horizontale idéale fixée auparavant.

2. Procédé selon la revendication 1, caractérisé en ce que, de plus, la position présentant un écart qui est prise par un appui prévu dans le véhicule automobile (1) est prise en considération pour l'autre appareil de mesure d'inclinaison (8) lors de la détermination de l'angle de défaut, par rapport au plan d'installation horizontale idéale fixé auparavant.

EP 0 259 513 B1

Fig. 1

Fig. 2

Fig. 3

EP 0 259 513 B1